# EUROPÄISCHE PATENTSCHRIFT

(11) **EP 1 427 986 B1**
(45) Veröffentlichungstag und Bekanntmachung des Hinweises auf die Patenterteilung: **26.04.2006**
(21) Anmeldenummer: 02772080.4
(22) Anmeldetag: 20.09.2002
(51) Int. Cl.: G01B 21/20, G01B 11/245, B61K 9/02

(54) **VERFAHREN ZUR VERMESSUNG VON GROSSBAUTEILEN, INSBESONDERE WAGENKÄSTEN VON SCHIENENFAHRZEUGEN**
METHOD FOR MEASURING LARGE COMPONENTS, ESPECIALLY THE BODY OF RAIL CARS
PROCEDE PERMETTANT DE MESURER DES COMPOSANTS DE DIMENSIONS ELEVEES, EN PARTICULIER LA CARROSSERIE DE VEHICULES SUR RAILS

(30) Priorität: 21.09.2001 DE 10146713
(43) Veröffentlichungstag der Anmeldung: 16.06.2004
(73) Patentinhaber: SIEMENS AKTIENGESELLSCHAFT, 80333 München (DE)
(72) Erfinder: BOHEIM, Willi-Fred, 15827 Dahlewitz (DE); LASCHET, Udo, 41748 Viersen (DE); RELLER, Horst, 52531 Übach-Palenberg (DE)
(86) Internationale Anmeldenummer: PCT/DE2002/003526
(87) Internationale Veröffentlichungsnummer: WO 2003/027604

(56) Entgegenhaltungen:
- DE-A- 4 015 086
- US-A- 5 903 355

## Beschreibung

Im Schienenfahrzeugbau dient die Vermessung von Wagenkästen dem Nachweis der Einhaltung der geometrischen Vorgaben für eine Reihe von ausgewählten Maßen nach den Vorgaben für die Abnahme des Rohbaus, die Übergabe zu den nächsten Arbeitsschritten und die Endvermessung. Zum diesbezüglichen Stand der Technik gehört die Deutsche Norm DIN 25043, in deren Teil 1 die Vermessungsgrundlagen einschließlich einer Definition der Begriffe und in deren Teil 2 die Messvorgänge aufgezeigt sind, wobei das Beiblatt 1 zu Teil 2 von DIN 25043 einen Messblatt-Vordruck beinhaltet. Außerdem ist die Vermessung von Wagenkästen in der Druckschrift DS 98611 der Deutschen Bahn AG beschrieben. Bei den demnach üblichen Vermessungen wird als nachteilig angesehen, dass für das Herstellen der Bezugslage der Wagenkästen, die vor dem eigentlichen Vermessen der Wagenkastenkontur zu schaffen ist, unterschiedliche Verfahren bei den Rohbauten und den fertigen Wagenkästen angewendet werden, beispielsweise das manuell kontrollierte Grenzwindeverfahren bzw. hydraulisch arbeitende Einrichtungen für die Eckkraftmessungen. Weiter ungünstig werden für das Vermessen des Wagenkastens, der sich in der Bezugslage befindet, traditionell Gerüste aus Draht oder Schnur, Lote und herkömmliche Längenmesstechnik eingesetzt. Die Weiterentwicklung der Schienenfahrzeuge, insbesondere bei Schnell- und Hochgeschwindigkeitsbahnen erfordert eine hohe Präzision bei der Vermessung und beinhaltet damit bei dem bisherigen Messkonzept neben einer großen Sorgfalt einen hohen personellen und zeitlichen Aufwand qualifizierter Fachleute.

DE-A-40 15 086 beschreibt ein Verfahren zum Vermessen von Einsenbahnwagen auf Schienen mittels eines Vermessungsportats, an dessen Innenseite bewegliche optische Abstandssensoren angebracht sind.

Der Erfindung liegt die Aufgabe zugrunde, ein exaktes Messverfahren mit einheitlichen, digitalisierten Messmethoden und integrierter Messwerterfassung bei gleichzeitiger Reduzierung des personellen und zeitlichen Aufwandes zu schaffen.

Diese Aufgabe wird erfindungsgemäß durch ein für die Vermessung der Rohbauten und die Endvermessung von Großbauteilen (wie Wagenkästen und deren Produktionsvorrichtungen) geeignetes Verfahren auf folgende Weise gelöst:
a) Erzeugen der spannungsfreien Lage des Großbauteiles, in der dieses keine Verwindung aufweist, mittels einer mechanischen Eckkraft-Messeinrichtung,
b) Erzeugen der Bezugslage des Großbauteiles, ebenfalls mit Hilfe der Eckkraft-Messeinrichtung,
c) Messung der z-Maße des Großbauteiles mittels eines elektronischen, selbstnivellierenden Rundum-Lasers und Laserempfängern, wobei der Laser eine horizontale Ebene aufspannt und die am Großbauteil bzw. an Messadaptern angeordneten Empfänger die Laserebene automatisch suchen,
d) Messung der x-Maße und der y-Maße des Großbauteiles mittels eines Tachymeters.

Bei dem Verfahren nach der Erfindung wird eine Kombination aus mehreren Messmitteln verwendet, die ein Gesamtsystem darstellen:
1. Rundum-Laser - ein über drei Achsen elektronisch selbstnivellierender Hochbaulaser für horizontalen und vertikalen Einsatz.
2. Laserempfänger - ein Empfänger für Rotationslaserstrahlen mit einem aktiven Sensor, der einen definierten Messbereich abfährt und den Mittelpunkt des Laserstrahles oder der Lichtebene selbstständig sucht und die gefundene Position anschließend digital anzeigt. Der Nullpunkt des Empfängers kann über den gesamten Messbereich beliebig verstellt werden.
3. Tachymeter - ein motorisch angetriebenes optisches Theodolitensystem, das über einen vertikalen und horizontalen Teilkreis eines Theodoliten verfügt und zusätzlich einen integrierten Distanzmesser für Messungen gegen am Großteil befindliche Reflektoren als Zielmarken aufweist. Für das Tachymeter wird ein verstellbares schweres Stativ aus Aluminium genutzt.
4. Ein handelsüblicher Rechner (PC) mit Bildschirm.
5. Adapter zur Aufnahme der Messwerte - zur direkten Antastung der Messpunkte am Wagenkasten bei der Messung mittels Rundum-Laser oder Tachymeter, wobei diese Adapter auf die fahrzeugspezifischen Messpunkte, die beiden vorgenannten Geräte und die eingesetzte Software abgestimmt sind.
6. Entsprechende Programme(Software), die u. a. der Handhabung des Tachymeters, der Übermittlung von Messdaten zum PC und der ersten Auswertung dieser Daten dienen.
   Die Anwender werden vom Beginn der Messung an über ein speziell an die Anforderungen für die Messung der Wagenkästen angepasstes Menue durch die gesamte Programmroutine geführt, wobei der für die Messung durchzuführende fahrzeugspezifische Ablauf jeweils programmiert ist. Der prinzipielle Pragrammablauf besteht darin, ein Koordinatensystem einzurichten und alsdann den Anwender entsprechend einem vorgegebenen Prüfablauf an die Messpunkte zu führen, die im Prüfplan des speziellen Fahrzeuges definiert sind. Die Messwerte werden anschließend exportiert und archiviert. Die Auswertung der Messergebnisse und letztlich die Erstellung von Messblättern für den Wagenkasten (siehe DIN 25043) erfolgt über ein weiteres Berechnungsprogramm.
7. Eine mechanische, elektrisch betätigbare Eckkraft-Messeinrichtung, ausgerüstet mit vier Spindel-Feinhubeinrichtungen, Kraftaufnehmern und Adaptern für den Wagenkasten. Zu dieser Messeinrichtung gehört ein fahrbares Bedienpult mit den entsprechenden Elementen zur Ansteuerung der Feinhubeinrichtungen, Steuerung des Messablaufes und zur Verarbeitung aller aus der Kraft- und Hubwegmessung gewonnenen Messwerte- Die Eckkraftvermessung basiert auf dem Prinzip der minimierten Kraftdifferenzen. Zweck dieser Vermessung sind die Einstellung der verwindungsfreien Lage des Wagenkastens sowie die Bestimmung der Schwerpunktlage und der Soll-Eckkräfte.

Für die Vermessung von Wagenkästen ist ein spezieller mobiler Messstand vorgesehen, der für den Messzyklus mit der Eckkraft-Messeinrichtung und Bezugspunkten ausgerüstet ist, die ein Maßbezugssytem darstellen. Davon ausgehend werden die Messpunkte am Wagenkasten gemessen.

Zu den Voraussetzungen für das Durchführen der Vermessung gehört, dass sich der Wagenkasten auf dem Eckkraft-Prüfstand befindet und seine spannungsfreie Lage vor der Vermessung mit Hilfe der Eckkraft-Messeinrichtung eingestellt wird. Die Messung der z-Maße erfolgt mittels des Rundum-Lasers und speziellen Adaptern nach Ablaufplan und Prüfplan für die Messpunkte. Für die Messung der x-Maße und der y-Maße wird das Tachymeter eingesetzt, und zwar ebenfalls nach Ablauf- und Prüfplan.

Die Vorteile des erfindungsgemäßen Verfahrens bestehen insbesondere darin, dass durch die Kombination der verwendeten Geräte exakte und reproduzierbare Messungen mit einer hohen Messgenauigkeit erzielt werden. Außerdem wird der Vorgang der Vermessung unter Zuhilfenahme der beschriebenen Messmittel automatisiert. Weiter günstig können Ungenauigkeiten durch die Verwendung nivellierter Vorrichtungen eliminiert werden.

## Patentansprüche

1. Verfahren zur Vermessung von Großbauteilen, insbesondere Wagenkästen von Schienenfahrzeugen, **gekennzeichnet durch** folgende Merkmale:
a) Erzeugen der spannungsfreien Lage des Großbauteiles, in der dieses keine Verwindung aufweist, mittels einer mechanischen Eckkraft-Messeinrichtung,
b) Erzeugen der Bezugslage des Großbauteiles, ebenfalls mit Hilfe der Eckkraft-Messeinrichtung,
c) Messung der z-Maße des Großbauteiles mittels eines elektronischen, selbstnivellierenden Rundum-Lasers und Laserempfängern, wobei der Laser eine horizontale Ebene aufspannt und die am Großbauteil bzw. an Messadaptern angeordneten Empfänger die Laserebene automatisch suchen,
d) Messung der x-Maße und der y-Maße des Großbauteiles mittels eines Tachymeters.

## Claims

1. Method for measurement of large components, in particular car bodies for rail vehicles, **characterized by** the following features:
a) production of the stress-free orientation of the large component in which it is not twisted, by means of a mechanical corner force measurement device,
b) production of the reference orientation of the large component, likewise with the aid of the corner force measurement device,
c) measurement of the z-dimensions of the large component by means of an electronic, self-levelling omnidirectional laser and laser receivers, with the laser covering a horizontal plane and the receivers which are arranged on the large component and/or on measurement adapters automatically searching the laser plane,
d) measurement of the x-dimensions and y-dimensions of the large component by means of a tachymeter.

## Revendications

1. Procédé destiné à mesurer des composants de grandes dimensions, notamment des caisses ou superstructures de véhicules sur rails, **caractérisé par** les phases suivantes :
a) réalisation de la position exempte de tensions du composant de grandes dimensions, dans laquelle celui-ci ne présente pas de déformations de gauchissement, au moyen d'un dispositif mécanique de mesure de force d'angle ou de coin,
b) réalisation de la position de référence du composant de grandes dimensions, également à l'aide du dispositif mécanique de mesure de force d'angle ou de coin,
c) mesure des dimensions en z du composant de grandes dimensions, au moyen d'un laser panoramique électronique, à nivellement automatique, et de récepteurs laser, le laser définissant un plan horizontal et les récepteurs disposés sur le composant de grandes dimensions ou sur des adaptateurs de mesure recherchant automatiquement le plan du laser,
d) mesure des dimensions en x et des dimensions en y du composant de grandes dimensions, au moyen d'un tachéomètre.
